# EUROPÄISCHE PATENTSCHRIFT

(11) **EP 1 241 451 B1**
(45) Veröffentlichungstag und Bekanntmachung des Hinweises auf die Patenterteilung: **16.03.2011**
(21) Anmeldenummer: 02002228.1
(22) Anmeldetag: 30.01.2002
(51) Int. Cl.: G01F 15/12, G01F 15/18

(54) **Abdeckung mit Filter zum Auffangen von Schmutz-Partikeln zur Verwendung mit einem Wasserzähler-Gehäuse**
Cap having a filter for collecting dirt particles for use with a water meter housing
Cache comprenant un filtre pour capter des particules de boue pour boîtier de compteur d'eau

(30) Priorität: 16.03.2001 DE 20104768 U; 28.06.2001 DE 20110697 U
(43) Veröffentlichungstag der Anmeldung: 18.09.2002
(73) Patentinhaber: Techem Energy Services GmbH, 65760 Eschborn (DE)
(72) Erfinder: Volz, Stefan, 63755 Alzenau (DE)
(74) Vertreter: KEIL & SCHAAFHAUSEN Patentanwälte

(56) Entgegenhaltungen:
- EP-A- 0 713 078
- EP-A- 1 111 350
- DE-U- 29 902 509
- FR-A- 2 541 131
- GB-A- 2 286 975

## Beschreibung

Die Erfindung betrifft einen Deckel für Anschlussgehäuse von Rohrleitungssystemen mit Leitungsabschnitten für Flüssigkeitseintritt und Flüssigkeitsaustritt und einer Gehäuseöffnung zur Anbringung eines Flüssigkeitszählers oder dergleichen.

In Rohrleitungssystemen zur Wasserversorgung oder für den Heizkreislauf in Gebäuden sind in der Regel Flüssigkeitszähler vorgesehen, die den Wasseroder Wärmemediumverbrauch erfassen. Die Zähler werden an Anschlussgehäusen befestigt, die in das Rohrleitungssystem integriert sind und über Leitungsanschlüsse für den Flüssigkeitseintritt und den anschließenden Flüssigkeitsaustritt verfügen. Der Zähler wird in eine üblicherweise senkrecht zu diesen Leitungsabschnitten vorgesehene Gehäuseöffnung eingeschraubt. In dem Anschlussgehäuse können außerdem Strömungsführungen vorgesehen sein, um eine gezielte Anströmung des Zählers zu erreichen (siehe z.B. DE 299 02 509 U).

Bei der Errichtung derartiger Anlagen oder Wartungsarbeiten werden jedoch häufig kleine Späne erzeugt, die im Heizkreislauf verbleiben und von dem strömenden Heizmedium mitgeführt werden. Diese Späne sind ohne größeren Aufwand nicht aus dem Heizkreislauf zu entfernen und können durch Verschmutzung des Volumenmessteils zu Störungen oder gar Beschädigungen von Wärmezählern führen.

Bei Wasserleitungen, in denen Messkapsel-Wasserzähler eingesetzt werden, werden zum Entfernen der Späne oder von Korrosionsprodukten in der Rohrleitung Blinddeckel anstelle der Messkapseln in das Anschlussgehäuse eingesetzt und das Wasser durch einen voll geöffneten Wasserhahn laufen lassen. Dadurch sollen die Verschmutzungen aus dem Rohrleitungssystem herausgespült werden. Abgesehen von dem entstehenden Wasserverbrauch muss nach dem Spülen auch der Perlator des Wasserhahnes ausgebaut und gereinigt werden, was einen zusätzlichen Aufwand bewirkt.

Aufgabe der Erfindung ist es daher, Verschmutzungen auf einfachere Weise aus den Rohrleitungssystemen zu entfernen.

Diese Aufgabe wird mit der Erfindung im Wesentlichen durch einen Deckel gelöst, der einen in die Gehäuseöffnung eingreifenden Leitungsabschnitt aufweist, durch den die Flüssigkeit geführt wird, wobei in dem Leitungsabschnitt ein Filterelement angeordnet ist. Dieser Deckel wird anstelle des Wärme- oder Wasserzählers in das Anschlussgehäuse eingesetzt, wobei die die Rohrleitung durchströmende Flüssigkeit durch das Filterelement hindurchgeführt wird. Dadurch werden die störenden Späne oder anderen Schmutzteile aufgefangen und können mit dem Deckel entfernt werden. Da die Verschmutzungen nicht mehr in den nachgeordneten Leitungstrakt gelangen, wird der verschmutzungsbedingte Ausfall von Wärmezählern in Heizungsanlagen vermieden und die Reinigung von Perlatoren an Zapfstellen entfällt.

Gemäß einer vorteilhaften Ausgestaltung der Erfindung liegt der Leitungsabschnitt an einer Dichtfläche des Gehäuses an und trennt den Flüssigkeitseintritt von dem Flüssigkeitsaustritt, so dass die Strömung vollständig durch das Filterelement geführt wird.

Vorzugsweise ist das Filterelement einstückig mit dem Leitungsabschnitt verbunden, so dass es ohne zusätzliche Montageschritte gemeinsam mit dem Deckel in das Anschlussgehäuse eingesetzt werden kann.

Gemäß einer bevorzugten Ausgestaltung der Erfindung ist das Filterelement ein Sieb, mit dem die üblicherweise in Rohrleitungen auftretenden Verschmutzungen zuverlässig aufgefangen werden können. Nach Entfernen des Deckels aus dem Anschlussgehäuse können die Verschmutzungen einfach aus dem Deckel ausgespült werden.

Schließt sich an das Sieb ein umlaufender Bund an, so wird beim Herausnehmen des Deckels mit dem Sieb ein Herabfallen der Späne oder dgl. vermieden.

Der Leitungsabschnitt weist erfindungsgemäß wenigstens eine Öffnung für den Strömungseintritt und wenigstens eine Öffnung für den Strömungsaustritt auf, so dass eine definierte Strömungsführung erreicht wird.

Vorzugsweise weist der Leitungsabschnitt eine zylindrische Form auf, wobei die Öffnung für den Strömungseintritt in Radialrichtung und die Öffnung für den Strömungsaustritt in Axialrichtung angeordnet ist, oder umgekehrt. Die Gestaltung des Leitungsabschnittes kann hierbei an die des Anschlussgehäuses angepasst sein, das bereits eine Strömungsführung zur gezielten Anströmung des Zählers aufweisen kann.

Die Erfindung wird nachfolgend anhand eines Ausführungsbeispiels und der Zeichnung näher erläutert.

Es zeigen:

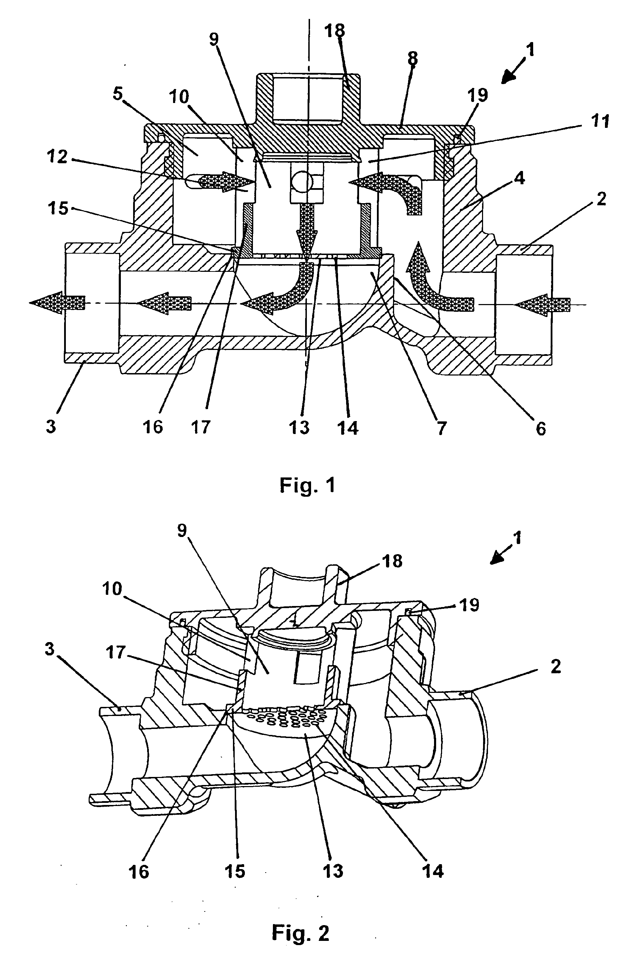

- Fig. 1: einen perspektivischen Längsschnitt durch ein Anschlussgehäuse mit einem erfindungsgemäßen Deckel und
- Fig. 2: einen perspektivischen Längsschnitt durch das Anschlussgehäuse mit Deckel in einer anderen Projektionsrichtung.

In Rohrleitungssystemen für die Wasserversorgung oder den Heizkreislauf von Gebäuden ist ein Anschlussgehäuse 1 mit Leitungsabschnitten 2, 3 für die Verbindung mit den Rohrleitungen und den Flüssigkeitseintritt bzw. -austritt vorgesehen. Im Wesentlichen senkrecht zu den Leitungsabschnitten 2, 3 ist ein Gehäusestutzen 4 vorgesehen, in dem eine Gehäuseöffnung 5 zur Befestigung eines Wasser- oder Wärmezählers ausgebildet ist. Das Anschlussgehäuse 1 weist Leitflächen 6 zur Wasserführung und eine im Wesentlichen zentrale, in der Zeichnung senkrechte Austrittsöffnung 7 auf, die in den Leitungsabschnitt 3 für den Flüssigkeitsaustritt übergeht. Die Leitflächen 6 und die Austrittsöffnung 7 sind an die Erfordernisse eines in der Zeichnung nicht dargestellten Zählers angepasst und sollen eine definierte Strömungszufuhr und -abfuhr zu/von dem Zähler bewirken. Sofern der Zähler einen anderen Strömungsverlauf erfordert, kann das Anschlussgehäuse entsprechend anders ausgestaltet sein.

Auf dieses üblicherweise unter Putz in den Rohrleitungssystemen integrierte Anschlussgehäuse 1 wird ein erfindungsgemäßer Deckel 8 aufgesetzt, der über eine Gewinde- oder Schnappverbindung in die Gehäuseöffnung 5 eingesetzt wird. Auf der Innenseite des Deckels 8 ist ein Leitungsabschnitt 9 vorgesehen, der in seiner im Wesentlichen zylindrischen Wandung 10 radiale Eintrittsöffnungen 11, 12 für die Flüssigkeit aufweist. An dem dem Deckel 8 gegenüberliegenden Boden des Leitungsabschnittes 9 ist ein Filterelement 13 in Form eines Siebes mit einer Vielzahl von Durchtrittsöffnungen 14 vorgesehen.

Radial außen schließt sich an das Sieb 13 eine Dichtflächenabdeckung 15 an, die auf einer Dichtfläche 16 des Anschlussgehäuses 1 abgedichtet aufliegt. Das Sieb 13 ist einstückig mit dem Leitungsabschnitt 9 ausgebildet, insbesondere in die Dichtflächenabdeckung 15 eingespritzt. Zwischen dem Sieb 13 und den Eintrittsöffnungen 11, 12 ist die Wandung 10 des Leitungsabschnittes 9 als durchgehender Bund 17 ausgebildet. Der Leitungsabschnitt 9 ist über eine Schnappverbindung oder dergleichen fest mit dem Deckel 8 verbunden. Der Deckel 8 weist auf seiner Außenseite einen bspw. sechskantförmigen Vorsprung 18 für den Angriff eines Werkzeuges auf. Die Abdichtung des Deckels 8 gegenüber dem Gehäusestutzen 4 des Anschlussgehäuses 1 wird über eine Dichtung 19, bspw. einen O-Ring gewährleistet.

Der erfindungsgemäße Deckel 8 mit daran angebrachtem Leitungsabschnitt 9 wird vor Inbetriebnahme der Heizungseinrichtung bzw. beim Spülen der Wasserleitung anstelle des Wärme- oder Wasserzählers in den Anschlussstutzen 1 eingesetzt. Strömt nun die Flüssigkeit durch das Anschlussgehäuse 1, so werden darin enthaltene Späne oder andere Verschmutzungen von dem Sieb 13 aufgefangen und können zusammen mit dem Deckel 8 aus dem Anschlussgehäuse 1 herausgenommen werden. Durch den umlaufenden Bund 17 wird hierbei ein Herausfallen der Schmutzteile verhindert, so dass eine sichere Entfernung der Verschmutzung gewährleistet ist. Der Deckel 8 mit dem Leitungsabschnitt 9 lässt sich anschließend problemlos ausspülen und reinigen. Aus dem Heizkreislauf bzw. der Wasserleitung sind die Verschmutzungen zuverlässig entfernt. Ein Mehraufwand für den Monteur ergibt sich nicht, da alle Arbeitsschritte im Feld die gleichen bleiben wie bei der herkömmlichen Inbetriebnahme bzw. Reinigung des Rohrleitungssystems. Dagegen entfällt die anschließende Reinigung von Perlatoren beim Durchspülen der Wasserleitungen.

### Bezugszeichenliste:

- 1: Anschlussgehäuse
- 2: Leitungsabschnitt
- 3: Leitungsabschnitt
- 4: Gehäusestutzen
- 5: Gehäuseöffnung
- 6: Leitfläche
- 7: Austrittsöffnung
- 8: Deckel
- 9: Leitungsabschnitt
- 10: Wandung
- 11: Eintrittsöffnung
- 12: Eintrittsöffnung
- 13: Filterelement
- 14: Durchtrittsöffnung
- 15: Dichtflächenabdeckung
- 16: Dichtfläche
- 17: Bund
- 18: Vorsprung
- 19: Dichtung

## Patentansprüche

1. Deckel für Anschlussgehäuse (1) von Rohrleitungssystemen mit Leitungsabschnitten (2, 3) für den Flüssigkeitseintritt und den Flüssigkeitsaustritt und mit einer Gehäuseöffnung (5) zur Anbringung eines Flüssigkeitszählers, wobei der Deckel zum Einsatz anstelle des Flüssigkeitszählers bestimmt ist, **gekennzeichnet durch** einen in die Gehäuseöffnung (5) eingreifenden Leitungsabschnitt (9) **durch** den die Flüssigkeit geführt wird, wobei in dem Leitungsabschnitt (9) ein Filterelement (13) angeordnet ist, wobei der Leitungsabschnitt (9) wenigstens eine Öffnung (11,12) für den Flüssigkeitseintritt und wenigstens eine Öffnung (14) für den Flüssigkeitsaustritt aufweist.

2. Deckel nach Anspruch 1, **dadurch gekennzeichnet, dass** der Leitungsabschnitt (9) über eine Dichtflächenabdeckung (15) an einer Dichtfläche (16) des Anschlussgehäuses (1) anliegt und den Flüssigkeitseintritt (2) von dem Flüssigkeitsaustritt (3) trennt.

3. Deckel nach einem der vorhergehenden Ansprüche, **dadurch gekennzeichnet, dass** das Filterelement (13) einstückig mit dem Leitungsabschnitt (9) verbunden ist.

4. Dichtelement nach einem der vorhergehenden Ansprüche, **dadurch gekennzeichnet, dass** das Filterelement (13) ein Sieb ist.

5. Deckel nach einem der vorhergehenden Ansprüche, **dadurch gekennzeichnet, dass** sich an das Filterelement (13) ein umlaufender Bund (17) anschließt.

6. Deckel nach einem der vorhergehenden Ansprüche, **dadurch gekennzeichnet, dass** der Leitungsabschnitt (9) im Wesentlichen zylindrisch geformt ist und dass die Öffnung (11, 12) für den Strömungseintritt in Radialrichtung und die Öffnung (14) für den Strömungsaustritt in Axialrichtung angeordnet sind, oder umgekehrt.

## Claims

1. Lid for a connection housing (1) of pipeline systems with line sections (2, 3) for liquid entry and liquid exit and with a housing opening (5) for mounting a flow meter, wherein the lid is meant for use instead of the flow meter, **characterised by** a line section (9) engaging into the housing opening (5), through which the liquid is guided, wherein a filter element (13) is arranged in the line section (9), wherein the line section (9) has at least one opening (11, 12) for liquid entry and at least one opening (14) for liquid exit.

2. Lid according to Claim 1, **characterised in that** the line section (9) bears via a sealing surface cover (15) against a sealing surface (16) of the connection housing (1) and separates the liquid entry (2) from the liquid exit (3).

3. Lid according to any one of the preceding claims, **characterised in that** the filter element (13) is integrally connected to the line section (9).

4. Sealing element according to any one of the preceding claims, **characterised in that** the filter element (13) is a sieve.

5. Lid according to any one of the preceding claims, **characterised in that** a circumferential collar (17) abuts against the filter element (13).

6. Lid according to any one of the preceding claims, **characterised in that** the line section (9) is shaped in an essentially cylindrical manner and **in that** the opening (11, 12) for the flow entry is arranged in the radial direction and the opening (14) for the flow exit is arranged in the axial direction, or vice versa.

## Revendications

1. Couvercle pour boîtiers de raccordement (1) de systèmes de conduite présentant des tronçons de conduite (2, 3) pour l'entrée de liquide et la sortie de liquide et une ouverture de boîtier (5) pour le logement d'un compteur de liquide, le couvercle étant destiné à l'utilisation au lieu du compteur de liquide, **caractérisé par** un tronçon de conduite (9) s'engageant dans l'ouverture de boîtier (5), par lequel le liquide est guidé, un élément filtrant (13) étant disposé dans le tronçon de conduite (9), le tronçon de conduite (9) présentant au moins une ouverture (11, 12) pour l'entrée de liquide et au moins une ouverture (14) pour la sortie de liquide.

2. Couvercle selon la revendication 1, **caractérisé en ce que** le tronçon de conduite (9) s'applique au moyen d'un revêtement de surface d'étanchéité (15) sur une surface d'étanchéité (16) du boîtier de raccordement (1) et sépare l'entrée de liquide (2) de la sortie de liquide (3).

3. Couvercle selon l'une quelconque des revendications précédentes, **caractérisé en ce que** l'élément filtrant (13) est relié d'une seule pièce au tronçon de conduite (9).

4. Elément d'étanchéité selon l'une quelconque des revendications précédentes, **caractérisé en ce que** l'élément filtrant (13) est un tamis.

5. Couvercle selon l'une quelconque des revendications précédentes, **caractérisé en ce qu'**une collerette (17) périphérique se raccorde à l'élément filtrant (13).

6. Couvercle selon l'une quelconque des revendications précédentes, **caractérisé en ce que** le tronçon de conduite (9) est formé de façon sensiblement cylindrique et **en ce que** l'ouverture (11, 12) pour l'entrée d'écoulement et l'ouverture (14) pour la sortie d'écoulement sont disposées respectivement dans le sens radial et le sens axial, ou inversement.
